# FASCICULE DE BREVET EUROPEEN

(11) **EP 2 831 574 B1**
(45) Date de publication et mention de la délivrance du brevet: **01.06.2022**
(21) Numéro de dépôt: 13713187.6
(22) Date de dépôt: 28.03.2013
(51) Int. Cl.: G01N 30/08, G01N 30/60, B01L 3/00, G01N 1/40, G01N 30/38, G01N 30/12, B01D 15/08

(54) **DISPOSITIF ET PROCEDE D'EXTRACTION DE COMPOSES CONTENUS DANS UN ECHANTILLON LIQUIDE EN VUE DE LEUR ANALYSE**
VORRICHTUNG UND VERFAHREN ZUR EXTRAKTION VON IN EINER FLÜSSIGKEITSPROBE ENTHALTENEN VERBINDUNGEN FÜR ANALYSEZWECKE
DEVICE AND METHOD FOR EXTRACTING COMPOUNDS CONTAINED IN A LIQUID SAMPLE WITH A VIEW TO ANALYSING THEM

(30) Priorité: 29.03.2012 FR 1252850
(43) Date de publication de la demande: 04.02.2015
(73) Titulaire: Commissariat à l'Énergie Atomique et aux Énergies Alternatives, 75015 Paris (FR)
(72) Inventeur: RICOUL, Florence, 38950 Quaix en Chartreuse (FR)
(74) Mandataire: Brevalex
(86) Numéro de dépôt international: PCT/EP2013/056798
(87) Numéro de publication internationale: WO 2013/144330

(56) Documents cités:
- EP-A1- 2 028 485
- EP-A2- 1 867 982
- WO-A2-2007/044473
- US-A1- 2004 056 016
- US-A1- 2006 099 718
- US-A1- 2011 126 609
- MINGXIAO LI ET AL: "Preconcentration and Analysis of Trace Volatile Carbonyl Compounds", ANALYTICAL CHEMISTRY, vol. 84, no. 3, 7 février 2012 (2012-02-07), pages 1288-1293, XP055028949, ISSN: 0003-2700, DOI: 10.1021/ac2021757
- ALFEELI B ET AL: "MEMS-based multi-inlet/outlet preconcentrator coated by inkjet printing of polymer adsorbents", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, vol. 133, no. 1, 28 juillet 2008 (2008-07-28), pages 24-32, XP022824172, ISSN: 0925-4005, DOI: 10.1016/J.SNB.2008.01.063 [extrait le 2008-02-15]
- ALFEELI B ET AL: "MEMS-based multi-inlet/outlet preconcentrator coated by inkjet printing of polymer adsorbents", SENSORS AND ACTUATORS B: CHEMICAL, ELSEVIER BV, NL, vol. 133, no. 1, 28 July 2008 (2008-07-28) , pages 24-32, XP022824172, ISSN: 0925-4005, DOI: 10.1016/J.SNB.2008.01.063 [retrieved on 2008-02-15]

## Description

### DOMAINE TECHNIQUE ET ART ANTÉRIEUR

La présente invention se rapporte à un dispositif et à un procédé d'extraction d'analytes contenus dans un liquide en vue de leur analyse, notamment en vue de leur analyse par chromatographie en phase gazeuse. La présente invention se rapporte également à un système d'analyse d'analytes contenus dans un liquide mettant en œuvre un tel dispositif d'extraction.

On entend par "analytes", des composés organiques volatiles présents dans une matrice liquide.

Dans le domaine de l'analyse d'analytes contenu dans un liquide au moyen d'une colonne de chromatographie en phase gazeuse, les analytes sont préalablement extraits et concentrés.

Plusieurs techniques existent pour extraire et concentrer des analytes contenus dans un liquide:
Une de ces techniques met en œuvre des fibres (SPME pour « solid phase microextraction » en terminologie anglo-saxonne) ou barreaux (SBSE pour « stir bar solid extraction » en terminologie anglo-saxonne ou NTD pour « needle trap device » en terminologie anglo-saxonne). La fibre est un consommable, comportant une phase adsorbante permettant de capturer une espèce chimique lorsqu'elle est trempée dans la solution analysée. On sèche la fibre et on la place dans l'entrée d'un injecteur d'une colonne de chromatographie. L'espèce chimique adsorbée est alors désorbée et transférée dans la colonne de chromatographie. Ces différentes étapes sont réalisées par des automates. Néanmoins, il faut au préalable effectuer l'échantillonnage dans des flacons.

Ce type d'automate est généralement encombrant et d'un coût de revient élevé.

Dans le cas d'appareils de chromatographie portables, l'extraction sur fibres est manuelle ainsi que l'introduction de la fibre vers la colonne.

De plus, la surface de collecte est relativement limitée. Cette technique présente alors une moindre sensibilité.

Une autre technique met en œuvre le procédé dit "Purge and Trap" lors duquel des automates font faire buller un gaz dans des flacons d'échantillons, de telle sorte que les analytes de la solution sont capturés dans la bulle de gaz. Les bulles sont entraînées dans un piège froid, sur lequel les molécules piégées dans les bulles se condensent. Ensuite, le piège froid est chauffé pour désorber les analytes par thermodésorption, qui sont transférés vers une colonne de chromatographie. Cette technique présente les inconvénients de devoir refroidir une surface et de devoir déplacer manuellement cette surface avec les molécules piégées pour la raccorder à l'entrée de la colonne.

Le document US2011/0126609 A1 (KAWARAI ET AL) divulgue un dispositif et une méthode d'analyse de polychlorobiphényles dans une huile d'isolation par pré-concentration des analytes sur une colonne d'extraction suivie d'une désorption thermique et le transfert des analytes vers une colonne de chromatographie en phase gazeuse au moyen d'un gaz porteur. Ledit dispositif comprend deux vannes de commutation pour le transport des fluides.

Il existe une technique pour l'extraction d'analytes contenus dans un gaz qui met en œuvre un micro-pré concentrateur en silicium dans lequel on fait circuler un gaz contenant les analytes, par exemple de l'air pour en quantifier les polluants, les analytes sont adsorbés sur le silicium. La sortie du pré-concentrateur est directement connectée au dispositif de détection. Les analytes sont ensuite transférés, après leur désorption, jusqu'au dispositif de détection par un flux de gaz porteur. Cette technique est par exemple décrite dans le document Camara, E.H.M., et al., Micro gas preconcentrator in porous silicon filled with a carbon absorbent. Sensors and Actuators, B: Chemical, 2010. 148(2): p. 610-619*.*

Cette technique ne permet pas l'extraction et la concentration d'analytes contenus dans une matrice liquide. En effet, dans le cas où le dispositif de détection est une colonne de chromatographie en phase gazeuse, la matrice liquide circulant à travers le pré-concentrateur pour effectuer l'adsorption des analytes circulerait également dans la colonne. Or la circulation de liquide dans la colonne aurait pour effet de dégrader la phase stationnaire de la colonne et d'offrir une qualité de séparation moindre.

Le document WO2007/044473 A2 divulgue l'utilisation d'un dispositif d'analyse comprenant un préconcentrateur microfabriqué muni de micro-vannes pour l'extraction/désorption d'analytes contenus dans un échantillon gazeux.

### EXPOSÉ DE L'INVENTION

C'est par conséquent un but de la présente invention d'offrir un dispositif et un procédé d'extraction d'analytes contenu dans une matrice liquide permettant une analyse automatique et autorisant l'analyse par chromatographie en phase gazeuse sans dégradation de la colonne.

Le but précédemment énoncé est atteint par un dispositif d'extraction comportant une zone munie d'une surface d'adsorption, une alimentation de ladite zone soit en liquide contenant les analytes, soit en un gaz séchant, soit en un gaz porteur, une sortie d'évacuation de ladite zone, ladite sortie étant apte à être connectée soit à un dispositif d'analyse, soit à une zone de collecte.

Le fonctionnement du dispositif se fait en trois étapes: l'entrée d'alimentation est configurée pour faire circuler le liquide dans la zone d'extraction et la sortie d'évacuation est configurée pour envoyer le liquide vers la zone de collecte, les analytes s'adsorbent alors sur la surface. Ensuite, l'entrée d'alimentation est configurée pour faire circuler le gaz séchant dans la zone d'extraction et la sortie d'évacuation est configurée pour envoyer le gaz séchant vers la zone de collecte. Et enfin, l'entrée d'alimentation est configurée pour faire circuler le gaz porteur dans la zone d'extraction et la sortie d'évacuation est configurée pour envoyer le gaz porteur vers le dispositif d'analyse, le gaz porteur transportant les analytes désorbés. Ainsi, dans le cas d'une analyse par colonne de chromatographie en phase gazeuse, aucun liquide ne circule dans celle-ci.

La zone d'extraction comporte des microstructures sur lesquelles vont s'adsorber les analytes. Les microstructures sont espacées les unes des autres d'une distance comprise avantageusement entre 10 µm et 50 µm, et le volume total de la zone d'extraction est de manière avantageuse inférieur à 20 µl.

Le choix de l'espacement des microstructures permet d'offrir une surface de capture formée par la surface des microstructures suffisamment importante tout en limitant les pertes de charge du liquide qui circule dans la zone d'extraction. Ainsi il est possible d'obtenir un flux de liquide avec un débit d'au moins 100 µl/min tout en appliquant une pression de l'ordre d'une dizaine de Bar et au plus de quelques dizaines de Bar. De plus, avec un volume de la zone d'extraction inférieur à 20 µl, le dispositif analytique, par exemple une microcolonne de chromatographie, n'est pas saturé en volume.

Ainsi, grâce à l'invention, il est possible d'analyser des analytes contenus dans un échantillon liquide, par exemple un dispositif analytique d'un flux gazeux avec une vitesse d'analyse suffisante, une surface de capture importante permettant d'améliorer la sensibilité de l'analyse et sans risque de saturer en volume le dispositif analytique.

De manière préférée, il est prévu une commutation automatique des alimentations et évacuations.

De manière avantageuse, la zone d'extraction-désorption comporte des moyens de thermodésorption de préférence des moyens de chauffage.

De manière préférée le gaz porteur est également le gaz séchant.

En outre, grâce à l'invention, il est possible de déterminer la concentration d'un analyte d'intérêt dans une solution liquide, sans nécessiter des opérations manuelles, à l'aide d'un dispositif automatique en ligne compact et portable.

Une programmation adéquate permet de réaliser des analyses successives : on dispose alors d'un suivi automatique de la concentration de l'analyte d'intérêt dans l'échantillon liquide.

En disposant d'un module portable, il est possible de disposer plusieurs modules dans l'environnement.

Enfin, le dispositif peut avantageusement être réalisé en silicium par les techniques de la microélectronique, ce qui permet d'obtenir un coût réduit.

La présente invention a alors pour objet un dispositif d'extraction d'au moins un analyte contenu dans un échantillon liquide comportant :
- une zone d'extraction et de désorption dudit analyte, munie d'une phase stationnaire, dite zone d'extraction,
- au moins une entrée d'alimentation de la zone d'extraction,
- au moins sortie d'évacuation de la zone de désorption
- des premiers moyens de commutation de connexion reliés à l'entrée d'alimentation, et reliés à un réservoir dudit échantillon liquide et à au moins une source de gaz, pour connecter l'entrée d'alimentation avec soit le réservoir dudit échantillon liquide, soit la source de gaz,
- des deuxièmes moyens de commutation de connexion reliés à la sortie d'évacuation et reliés à un réservoir de collecte et à un dispositif d'analyse dudit analyte, pour connecter la sortie d'évacuation avec soit le réservoir de collecte, soit le dispositif d'analyse,
- des moyens d'assistance à la désorption,
- une unité de commande desdits premiers et deuxièmes moyens de commutation de connexion de telle sorte que lorsque les premiers moyens de commutation de connexion autorisent l'alimentation en échantillon liquide de la zone d'extraction par l'entrée d'alimentation, les deuxièmes moyens de commutation de connexion (autorisent l'évacuation vers le réservoir de collecte par la sortie d'évacuation.

La zone d'extraction, microfabriquée, comporte des microstructures s'étendant d'un fond inférieur à un fond supérieur, et une phase stationnaire portée par lesdites microstructures, lesdites microstructures étant espacées les unes des autres d'une distance comprise entre 10 µm et 50 µm, et ladite zone d'extraction ayant un volume total inférieur à 20 µl.

Les moyens d'assistance à la désorption sont par exemple des moyens de chauffage de la zone d'extraction de sorte à provoquer la thermodésorption des analytes. Les moyens de chauffage assurent avantageusement une augmentation de la température de la zone d'extraction d'au moins 10°C/s.

Les microstructures peuvent être des micropiliers.

Par exemple, le dispositif d'extraction comporte un boîtier muni d'un fond et d'un capot, la zone d'absorption étant réalisée dans ledit fond et fermée par le capot. Le fond est réalisé de préférence en un matériau bon conducteur thermique.

L'unité de commande peut également piloter les moyens d'assistance à la désorption.

Par exemple, le dispositif est réalisé par un procédé microélectronique. Avantageusement l'unité de commande est telle que :
- lors d'une première étape de fonctionnement, elle pilote les premiers et deuxièmes moyens de commutation de connexion de sorte que la zone d'extraction soit alimentée en échantillon liquide et ledit échantillon liquide soit évacué vers le réservoir de collecte,
- lors d'une deuxième étape de fonctionnement, elle pilote les premiers et deuxièmes moyens de commutation de connexion de sorte que la zone d'extraction soit alimentée en gaz par entrée d'alimentation et ledit gaz soit évacué vers le réservoir de collecte,
- lors d'une troisième étape de fonctionnement, elle pilote les moyens d'assistance à la désorption et les premiers et deuxièmes moyens de commutation de connexion de sorte que la zone d'extraction soit alimentée en gaz par l'-entrée d'alimentation et ledit gaz soit évacué vers le dispositif d'analyse.

Le dispositif d'analyse est par exemple un système de chromatographie en phase gazeuse.

Le système d'analyse peut comporter une connexion directe entre la source de gaz et la colonne de chromatographie et des troisièmes moyens de commutation de connexion de sorte que lorsque les premiers moyens de commutation autorisent l'alimentation de la zone d'extraction par la source de gaz, lesdits troisièmes moyens de commutation de connexion interrompent l'alimentation directe de la colonne de chromatographie en phase gazeuse par la source de gaz.

La présente invention a également pour objet un procédé d'extraction d'au moins un analyte contenu dans un échantillon liquide comportant les étapes :
a) mise en circulation dudit échantillon liquide à travers une zone d'extraction munie d'une phase stationnaire, ledit analyte s'adsorbant dans la zone d'extraction, ledit échantillon liquide étant évacué vers un réservoir de collecte,
b) interruption de ladite circulation de l'échantillon liquide,
c) mise en circulation d'un gaz à travers la zone d'extraction pour sécher ladite zone d'extraction, ledit gaz étant évacué vers ladite zone de collecte
d) interruption de ladite circulation de gaz,
e) mise en circulation d'un gaz à travers la zone d'extraction dudit analyte et désorption dudit analyte,

Dans l'étape e), la zone d'extraction peut être chauffée pour provoquer la désorption.

Le gaz circulant lors de l'étape c) et le gaz circulant lors de l'étape e) sont avantageusement les mêmes et forment un gaz porteur.

Par exemple, l'étape c) dure entre 1 s et quelques minutes, de préférence entre 1 s et 60 s, et la désorption de l'étape e) dure entre 1 s et 10 s.

La présente invention a également pour objet un procédé d'analyse d'au moins un analyte contenu dans un liquide comportant les étapes a) à e) du procédé d'extraction selon l'invention, et une étape f) suivant l'étape e), dans laquelle ledit analyte est analysé.

L'étape f) peut être une chromatographie en phase gazeuse.

Avantageusement l'échantillon liquide est une solution aqueuse et les analytes sont des composés organiques volatiles.

### BRÈVE DESCRIPTION DES DESSINS

La présente invention sera mieux comprise à l'aide de la description qui va suivre et des dessins en annexes sur lesquels :
- la figure 1 est une représentation schématique d'un exemple d'un dispositif d'extraction et de concentration,
- la figure 2 est une vue partielle de dessus d'un exemple de structuration de la zone d'extraction,
- les figures 3A à 3C sont des représentations schématiques de différentes étapes de fonctionnement d'un système d'analyse selon l'invention.

### EXPOSÉ DÉTAILLÉ DE MODES DE RÉALISATION PARTICULIERS

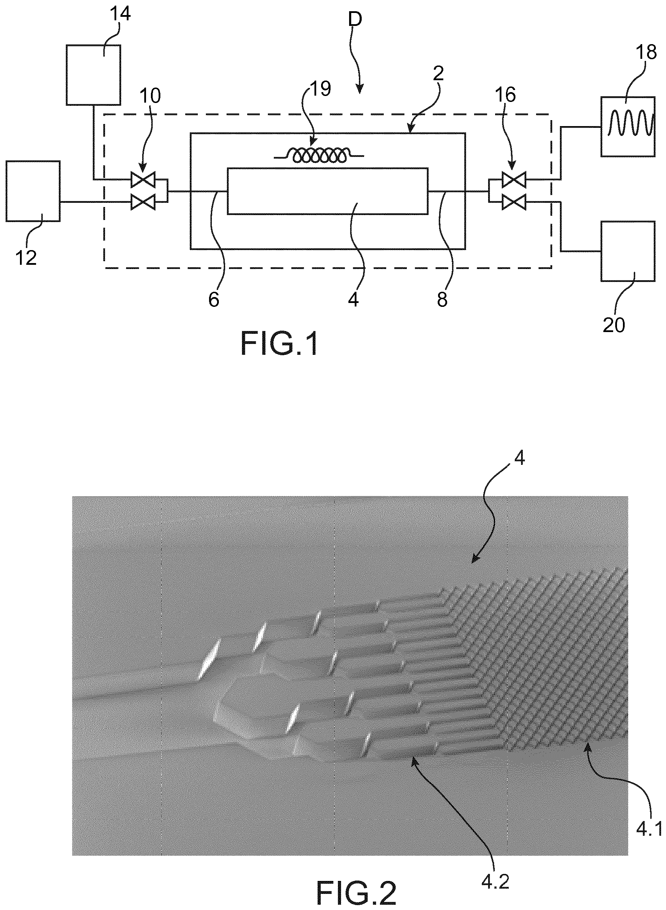

Sur la figure 1, on peut voir une représentation schématique d'un exemple d'un dispositif d'extraction et de concentration selon la présente invention.

Le dispositif D comporte un module 2 contenant une zone d'absorption et de désorption 4. Le module comporte un orifice d'alimentation 6 et un orifice d'évacuation 8 assurant respectivement l'alimentation de la zone d'extraction 4 en fluide et l'évacuation de la zone d'extraction 4.

A des fins de simplicité, la zone d'extraction 4 d'adsorption et désorption sera désignée dans la suite de la description par « la zone d'extraction 4 ».

Par exemple, le module 2 est formé par un boîtier muni d'un fond et d'un capot, la zone d'extraction 4 étant réalisée dans le fond du boîtier et est fermée de manière étanche par le capot.

La zone d'extraction 4 est formée par un canal ou plusieurs canaux sur la surface desquels les analytes vont s'adsorber et se désorber. La zone d'extraction 4 présente de préférence un grand rapport surface sur volume permettant d'adsorber efficacement les analytes.

La zone d'extraction comporte des microstructures. Ces microstructures s'étendent d'un fond inférieur à un fond supérieur du dispositif. Ces microstructures sont par exemple des micropiliers ou microcolonnes de section constante entre le fond inférieur et le fond supérieur. Cette forme présente l'avantage de limiter les perturbations dans l'écoulement et est compatible avec les procédés de microfabrication.

La phase stationnaire est portée par les microstructures. Ces microstructures augmentent la surface sur laquelle les analytes peuvent s'adsorber, ce qui permet d'augmenter la sensibilité de l'analyse.

Les microstructures sont espacées les unes des autres d'une distance comprise avantageusement entre 10 µm et 50 µm, de manière préférée entre 10 µm et 30 µm.

La zone d'extraction présente alors une surface de capture suffisante tout en limitant les pertes de charge du flux de liquide. Ainsi, on peut obtenir un flux dont le débit est d'au moins 100 µl/minute, en appliquant une pression au liquide d'une dizaine de Bar, au plus de quelques dizaines de Bar, et inférieure à 100 Bar. Les moyens d'application de la pression au liquide peuvent alors être de taille réduite.

En outre, ladite zone d'extraction présente un volume total avantageusement inférieur à 20 µl, de préférence inférieur à 10 µl. Ainsi, on évite de saturer en volume le dispositif analytique, par exemple la colonne de chromatographie.

Grâce au dispositif d'extraction, il est possible de traiter un grand volume d'échantillon liquide en un temps réduit du fait du débit que la structure de la zone d'extraction permet d'obtenir et de réaliser des analyses précises puisqu'on évite une saturation en volume du dispositif analytique.

Par exemple, les microstructures ont une hauteur comprise entre avantageusement 50 µm et 400 µm, de préférence entre 100 µm et 300 µm.

En effet, si la hauteur des microstructures était trop faible, afin de conserver le même volume total la zone d'extraction devrait présenter une longueur ou une largeur importante par rapport à sa hauteur, ce qui augmenterait les pertes de charge. Et si les microstructures avaient une hauteur trop importante, la forme des microstructures pourrait ne plus être suffisamment maîtrisée avec les procédés de microfabrication mis en œuvre.

La surface de la zone d'extraction 4 est recouverte d'une phase adsorbante ou phase stationnaire adaptée aux analytes à analyser. Par exemple, il peut s'agir de polymères liquides ou poreux, tels que le PDMS (polydiméthylsiloxane), le Tenax, DVB, Carboxen..., de nanotubes de carbone, de charbon actif, de silicium poreux. Dans le cas d'un dépôt de PDMS, son épaisseur est de l'ordre de quelques centaines de nm. Le dépôt de cette phase est obtenu par les procédés utilisés de manière connue dans la réalisation de colonne de chromatographie en phase gazeuse. La phase stationnaire est sous la forme d'un film dont l'épaisseur peut être comprise entre 50 nm à quelques µm, par exemple 2 µm ou 3 µm.

Le rapport Surface sur Volume de la zone d'extraction 4 peut être aussi élevé que 0,6 µm⁻¹ et 0,8 µm⁻¹, mais peut être encore supérieur dans le cas d'une zone d'extraction nanostructurée.

A titre d'exemple, les micropiliers ont une section carrée de 10 µm de côté et de hauteur 100 µm, et sont espacés les uns des autres de 10 µm.

Le dispositif comporte également des moyens de commutation amont 10 pour connecter l'orifice d'alimentation 6 soit à un réservoir 12 du liquide à analyser, soit à une source de gaz 14, en amont de la zone d'extraction 4. Les moyens de commutation amont 10 sont par exemple un couple de vannes. Ces vannes sont des vannes dites vannes d'arrêt, parce qu'elles passent d'une position ouverte à une position fermée.

Comme nous le verrons par la suite, le gaz est un gaz porteur, par exemple de l'hélium, de l'air, de l'azote ou de l'hydrogène.

En outre, comme nous le verrons lors de la description du fonctionnement du dispositif, celui-ci peut être connecté à deux sources de gaz différentes.

Le dispositif comporte également des moyens de commutation aval 16 pour connecter l'orifice d'évacuation 8 soit à un dispositif d'analyse 18, soit un réservoir de collecte 20, en aval de la zone d'extraction 4. Les moyens de connexion aval 16 sont par exemple formés par un couple de vannes d'arrêt, tel que précédemment décrit.

Cet exemple de réalisation met en œuvre deux couples de vannes, un orifice d'alimentation et un orifice d'évacuation, ce qui simplifie le dispositif.

De tels couples de vannes d'arrêt sont commandés de sorte que les deux vannes ne soient pas ouvertes simultanément.

Avantageusement, ces vannes d'arrêt peuvent se présenter sous la forme de dispositifs de type MEMS, ce qui permet une meilleure intégration lorsque le dispositif est réalisé dans un substrat de type Si.

Selon une variante, chaque couple de vanne d'arrêt disposé en amont ou en aval de la zone d'extraction 4 peut être remplacé par des vannes dites vannes 4 voies, bien connues dans le domaine de la chromatographie. Lorsqu'une vanne 4 voies est utilisée en amont de la zone d'extraction 4, formant alors le moyen de commutation amont 10, le quatrième orifice est connecté à une évacuation. Lorsqu'une vanne 4 voies est utilisée en aval de la zone d'extraction 4, formant alors le moyen de commutation aval 16, le quatrième orifice est connecté au gaz porteur du système d'analyse.

De préférence, le dispositif comporte une unité de commande pilotant les moyens de commutation 10, 16 de sorte à avoir un fonctionnement automatisé du dispositif. Néanmoins une commande manuelle des moyens de commutation 10, 16 est envisageable.

Des moyens d'injection 22 entre le réservoir de liquide 12 et la zone d'extraction 4 sont prévus, par exemple une pompe ou un pousse-seringue. Avantageusement, on utilise une micropompe, pouvant être intégrée dans le dispositif lorsque ce dernier est réalisé dans un substrat de type Si.

Les tubes de connexion sont par exemple formés par des capillaires dont le diamètre typique est de quelques 100 µm, typiquement 50 µm à 500 µm. En variante, on peut envisager de réaliser un système intégré sur un substrat en silicium, la circulation entre les réservoirs et la zone d'extraction 4 étant assurée par des microcanaux gravés dans le silicium.

De manière avantageuse, le dispositif D comporte des moyens 19 pour assister la désorption. Il s'agit par exemple de moyens de chauffage de la zone d'extraction 4 de sorte provoquer une élévation de température de la surface et à provoquer une thermodésorption des analytes. De manière préférentielle, ces moyens de chauffage provoquent une montée rapide de la température de la surface, par exemple de l'ordre de 10°C/s afin d'obtenir une désorption rapide des analytes et leur transfert rapide ver le dispositif d'analyse. Ces moyens de chauffage sont par exemple à effet Peltier externe ou une résistance électrique intégrée au boîtier ou en contact avec celui-ci. La résistance électrique peut par exemple être formée par une piste en métal, par exemple en Platine réalisé dans la surface de la zone. De manière avantageuse, les moyens de chauffage sont également pilotés par l'unité de commande. Ainsi, l'unité de commande, après avoir commutée l'orifice d'alimentation vers l'alimentation en gaz porteur et l'orifice d'évacuation vers le dispositif d'analyse, provoque automatiquement la désorption des analytes.

De manière avantageuse, les microstructures sont réalisées d'un seul tenant avec le fond du boîtier, par exemple par gravure. En outre, le matériau du fond du boîtier et des microstructures est avantageusement un bon conducteur thermique pour favoriser la montée rapide en température lors de la phase de thermodésorption.

Par exemple, le fond du boîtier est en silicium. En outre celui-ci peut être gravé suivant des motifs très variés et permet la réalisation d'objet à grande échelle, ce qui rend aisé la réalisation de microstructures dans la zone d'extraction 4.

Le dispositif, plus particulièrement la zone d'extraction 4 peut être réalisée par des procédés microélectroniques qui utilisent couramment le silicium

Le couvercle peut être transparent, par exemple en verre, ce qui permet une visualisation de la zone d'extraction 4. Le couvercle est par exemple fixé sur le fond par scellement moléculaire ou scellement anodique.

Sur la figure 2, on peut voir un exemple de structure d'une zone d'extraction 4 comportant une portion microstructurée 4.1 dans laquelle ont lieu l'adsorption et la désorption, et une zone amont d'alimentation 4.2 formée par une arborescence de canaux à partir de l'orifice d'alimentation 6 vers la portion microstructurée 4.1 qui assure une distribution homogène du liquide ou du gaz dan la portion microstructurée 4.1. La zone d'extraction 4 comporte également une zone aval d'évacuation (non représentée) présentant une arborescence pour collecter le fluide vers l'orifice d'évacuation.

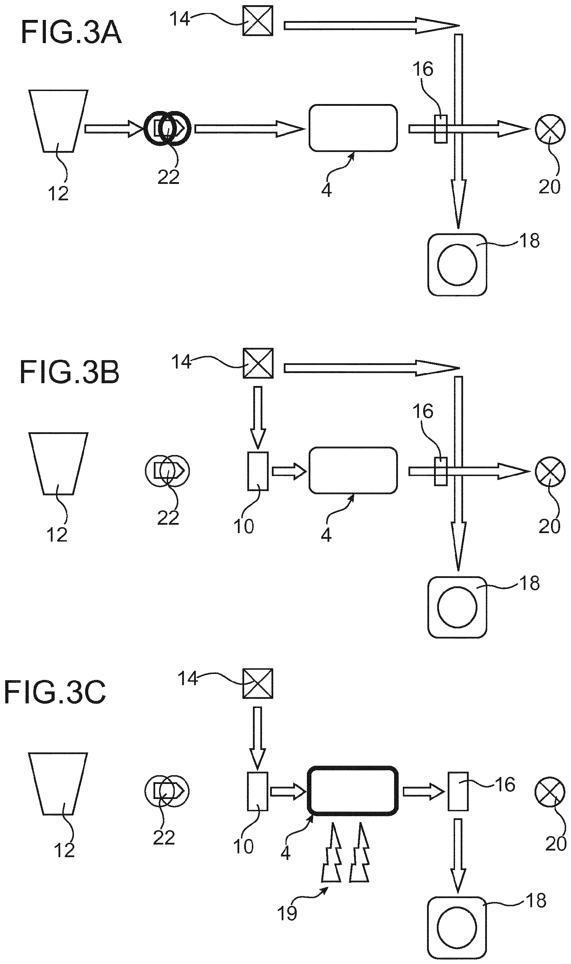

Sur la figure 3A, on peut voir un exemple d'un système d'analyse selon l'invention comportant un dispositif d'extraction de la figure 1, un réservoir d'échantillon liquide et une source de gaz porteur par exemple de l'hélium, tous deux connectés aux deux entrées au moyen de commutation amont 10. Le système comporte également un dispositif d'analyse par exemple un système de chromatographie en phase gazeuse et un réservoir de collecte tous deux connectés aux deux sorties du moyen de commutation aval 16.

Nous allons maintenant expliquer le fonctionnement du dispositif d'extraction et du système d'analyse à l'aide des figures 3A à 3C.

Nous prenons comme exemple de liquide à analyser est une solution aqueuse.

La circulation des fluides est symbolisée par des flèches.

Par exemple, la zone d'extraction 4 comporte des micropiliers de section carrée de 10 µm de côté, de 100 µm de hauteur, espacés les uns des autres de 10 µm et s'étendant sur une longueur de 4 cm et de largeur 180 µm.La section équivalente est 180 µm × 100 µm.

Lors d'une première phase de fonctionnement schématisé par la figure 3A, l'orifice d'alimentation 6 est connecté au réservoir de liquide et l'orifice d'évacuation est connecté au réservoir de collecte.

De préférence, la colonne est balayée par le gaz porteur, ce qui permet d'éviter une perturbation de l'équilibre lorsque les analytes seront injectés dans la colonne. Le débit en gaz porteur dans la colonne est par exemple de l'ordre de 1 ml/min.

Le liquide est injecté dans la zone d'extraction 4 au moyen de la pompe, par exemple à un débit de 10 µl/min à 500 µl/min. Les analytes s'adsorbent sur la surface de la zone d'extraction 4.

Le liquide, après avoir traversé la zone, est évacué dans le réservoir de stockage. Lors de la première phase, les analytes sont extraits du liquide par adsorption et sont concentrés dans la zone d'extraction 4.

La durée de cette première phase est par exemple comprise entre 10 minutes et 200 minutes, ainsi grâce à l'invention il peut être traité quelques dizaines de ml compte tenu des débits indiqués ci-dessus tout en restant dans un temps total d'analyse raisonnable.

La deuxième phase débute lorsqu'une quantité suffisante de liquide a été traitée, par exemple entre 5 ml et 100 ml, les moyens de connexion amont 10 sont alors commutés pour connecter l'orifice d'entrée à la source de gaz porteur. L'état des moyens de connexion d'évacuation 16 n'est pas modifié.

La circulation du gaz porteur à travers la zone a pour effet de sécher la surface de la zone d'extraction 4 de manière à éliminer l'eau et les contaminants minéraux afin que ceux-ci ne soient pas envoyer dans la colonne. Le gaz, après avoir traversé la colonne, est chargé d'eau et/ou de contaminants minéraux, et est évacué vers le réservoir de collecte.

Ainsi aucune phase liquide ne pénètre dans la colonne. La température lors de cette phase de séchage est telle que la désorption des analytes est négligeable. La température de séchage est typiquement la température ambiante, c'est-à-dire inférieure à 40°C. Au-delà, il y a un risque de désorber une quantité significative de molécule. De préférence il convient donc de rester en dessous du point d'ébullition des analytes afin qu'ils ne diffusent pas dans le gaz de séchage.

Par exemple le débit de gaz porteur est compris entre 1 ml/min et 10 ml/min.

La circulation de gaz porteur à travers la colonne est maintenue pendant cette phase.

Cette deuxième phase peut durer entre quelques secondes et quelques minutes, de préférence entre 30 s et 300 s.

En variante, on peut envisager que le gaz circulant dans la zone d'extraction 4 pour le séchage soit différent du gaz porteur qui est utilisé pour transporter les analytes dans la colonne.

Lors d'une troisième phase, les moyens de connexion d'évacuation 16 sont commutés pour connecter l'orifice de sortie de la zone d'extraction 4 à l'entrée de la colonne. En outre la circulation de gaz porteur de la colonne se fait désormais à travers le dispositif d'extraction et de concentration et non plus directement comme lors des première et deuxième phases.

Les moyens de chauffage sont activés provoquant une thermodésorption des analytes qui sont alors transférés par le gaz porteur jusqu'à la colonne. La phase de chauffage a une durée comprise entre 1 s et 10s. Généralement, durant la thermodésorption, la température à atteindre sera comprise entre 100°C et 300°C, la plage préférée étant entre 200°C et 300°C.

Grâce à l'invention, l'extraction peut se faire en continu, automatiquement et sans prélèvement manuel.

En outre, l'étape de préparation de l'échantillon peut être intégrée sur un dispositif de taille réduite et permettre de réaliser un dispositif d'analyse complet portable.

Par ailleurs, en utilisant une zone d'extraction et de désorption microstructurée, le temps d'extraction est réduit et le rendement d'extraction est amélioré.

L'invention s'applique à tous les liquides, et plus particulièrement aux solutions aqueuses, comportant des composés organiques, en effet la thermodésorption est particulièrement efficace pour ce type de composé.

Ce dispositif permet d'extraire les COV (composés organiques volatiles) tels que les alcools, les BTEX (benzène, toluène, éthylbenzène, xylène) qui sont des polluants atmosphériques, pesticides....

A titre d'exemple, le dispositif selon l'invention associé à un système de chromatographie en phase gazeuse permet de réaliser le dosage des COVs dans les réseaux de distribution d'eau potable, le contrôle de procédés industriels (par ex dans le domaine pharmaceutique, microélectronique,...), le contrôle de procédés dans le retraitement des eaux.

## Revendications

1. Dispositif d'extraction d'au moins un analyte contenu dans un échantillon liquide comportant :
- une zone d'extraction et de désorption (4) dudit analyte, munie d'une phase stationnaire, dite zone d'extraction (4),
- au moins une entrée d'alimentation (6) de la zone d'extraction (4),
- au moins une sortie d'évacuation (8) de la zone d'extraction,
- des premiers moyens de commutation de connexion (10) reliés à l'entrée d'alimentation (6), et reliés à un réservoir dudit échantillon liquide (12) et à au moins une source de gaz (14), pour connecter l'entrée d'alimentation (6) avec soit le réservoir dudit échantillon liquide (12), soit la source de gaz (14),
- des deuxièmes moyens de commutation de connexion (16) reliés à la sortie d'évacuation (8) et reliés à un réservoir de collecte (20) et à un dispositif d'analyse (18) dudit analyte, pour connecter la sortie d'évacuation (8) avec soit le réservoir de collecte (20), soit le dispositif d'analyse (18),
- des moyens d'assistance à la désorption (19),
- une unité de commande desdits premiers (10) et deuxièmes (16) moyens de commutation de connexion (10, 16) de telle sorte que lorsque les premiers moyens de commutation de connexion (10) autorisent l'alimentation en échantillon liquide de la zone d'extraction (4) par l'entrée d'alimentation (6), les deuxièmes moyens de commutation de connexion (16) autorisent l'évacuation vers le réservoir de collecte (20) par la sortie d'évacuation (8),
**Caractérisé en ce que** la zone d'extraction (4), microfabriquée, comporte des microstructures s'étendant d'un fond inférieur à un fond supérieur, et une phase stationnaire portée par lesdites microstructures, lesdites microstructures étant espacées les unes des autres d'une distance comprise entre 10 µm et 50 µm, et dans lequel la zone d'extraction a un volume total inférieur à 20 µl.

2. Dispositif d'extraction selon la revendication 1, dans lequel la distance entre les microstructures est comprise entre 10 µm et 30 µm.

3. Dispositif d'extraction selon la revendication 1 ou 2, dans lequel le volume total de la chambre d'extraction est inférieur à 10 µm.

4. Dispositif d'extraction selon l'une des revendications 1 à 3, dans lequel les moyens d'assistance à la désorption (19) sont des moyens de chauffage de la zone d'extraction (4) de sorte à provoquer la thermodésorption des analytes, les moyens de chauffage (19) assurant avantageusement une augmentation de la température de la zone d'extraction d'au moins 10°C/s.

5. Dispositif d'extraction selon l'une des revendications 1 à 4, dans lequel les microstructures sont des micropiliers.

6. Dispositif d'extraction selon l'une des revendications 1 à 5, dans lequel le fond inférieur et les microstructures sont d'un seul tenant et sont réalisés en un matériau bon conducteur thermique.

7. Dispositif d'extraction selon l'une des revendications 1 à 6, comportant un boîtier muni d'un fond, formant le fond inférieur et d'un capot formant le fond supérieur, la zone d'extraction (4) étant réalisée dans ledit fond et fermée par le capot.

8. Dispositif d'extraction selon l'une des revendications 1 à 7, dans lequel l'unité de commande pilote également les moyens d'assistance à la désorption (19).

9. Dispositif d'extraction selon l'une des revendications 1 à 8, dans lequel l'unité de commande est telle que :
- lors d'une première étape de fonctionnement, elle pilote les premiers (10) et deuxièmes (16) moyens de commutation de connexion de sorte que la zone d'extraction (4) soit alimentée en échantillon liquide et ledit échantillon liquide soit évacué vers le réservoir de collecte (20),
- lors d'une deuxième étape de fonctionnement, elle pilote les premiers (10) et deuxièmes (16) moyens de commutation de connexion de sorte que la zone d'extraction (4) soit alimentée en gaz par l'entrée d'alimentation (6) et ledit gaz soit évacué vers le réservoir de collecte,
- lors d'une troisième étape de fonctionnement, elle pilote les moyens d'assistance à la désorption (19) et les premiers (10) et deuxièmes (16) moyens de commutation de connexion de sorte que la zone d'extraction (4) soit alimentée en gaz par l'entrée d'alimentation (6) et ledit gaz soit évacué vers le dispositif d'analyse (18).

10. Système d'analyse comportant un dispositif d'extraction selon l'une des revendications 1 à 9, le dispositif d'analyse (18) étant une colonne de chromatographie en phase gazeuse.

11. Système d'analyse selon la revendication 10, comportant une connexion directe entre la source de gaz et la colonne de chromatographie (18) et des troisièmes moyens de commutation de connexion de sorte que lorsque les premiers moyens de commutation (10) autorisent l'alimentation de la zone d'extraction (4) par la source de gaz, lesdits troisièmes moyens de commutation de connexion interrompent l'alimentation directe de la colonne de chromatographie (18) par la source de gaz.

12. Procédé d'extraction d'au moins un analyte contenu dans un échantillon liquide au moyen du système d'extraction selon la revendication 10 ou 11, comportant les étapes :
a) mise en circulation dudit échantillon liquide à travers la zone d'extraction munie de la phase stationnaire, ledit analyte s'adsorbant dans la zone d'extraction, ledit échantillon liquide étant évacué vers un réservoir de collecte,
b) interruption de ladite circulation de l'échantillon liquide,
c) mise en circulation d'un gaz à travers la zone d'extraction pour sécher ladite zone d'extraction, ledit gaz étant évacué vers ladite zone de collecte
d) interruption de ladite circulation de gaz,
e) mise en circulation d'un gaz à travers la zone d'extraction dudit analyte et désorption dudit analyte.

13. Procédé d'extraction selon la revendication 12, dans lequel dans l'étape e), la zone d'extraction est chauffée pour provoquer la désorption.

14. Procédé d'extraction selon la revendication 12 ou 13, dans lequel le gaz circulant lors de l'étape c) et le gaz circulant lors de l'étape e) sont les mêmes et forment un gaz porteur, l'étape c) durant avantageusement entre 1 s et quelques minutes, de préférence entre 1 s et 60 s, et la désorption de l'étape e) durant avantageusement entre 1 s et 10 s.

15. Procédé d'analyse d'au moins un analyte contenu dans un liquide comportant les étapes a) à e) du procédé d'extraction selon l'une des revendications 12 à 14, et une étape f) suivant l'étape e), dans laquelle ledit analyte est analysé, l'étape f) étant avantageusement une chromatographie en phase gazeuse.

16. Procédé d'analyse selon la revendication 12 à 15, dans lequel l'échantillon liquide est une solution aqueuse et les analytes sont des composés organiques volatiles.

## Patentansprüche

1. Extraktionsvorrichtung für mindestens einen in einer flüssigen Probe enthaltenen Analyten, die Folgendes umfasst:
- eine Extraktions- und Desorptionszone (4) des Analyten, die mit einer stationären Phase, der Extraktionszone (4), ausgestattet ist,
- mindestens einen Zufuhreinlass (6) der Extraktionszone (4),
- mindestens einen Abfuhrauslass (8) aus der Extraktionszone,
- erste Verbindungsschaltmittel (10), die mit dem Zufuhreinlass (6) verbunden sind und mit einem Behälter für die flüssige Probe (12) und mit mindestens einer Gasquelle (14) verbunden sind, um den Zufuhreinlass (6) entweder mit dem Behälter für die flüssige Probe (12) oder der Gasquelle (14) zu verbinden,
- zweite Verbindungsschaltmittel (16), die mit dem Abfuhrauslass (8) verbunden sind und mit einem Sammelbehälter (20) und einer Analysevorrichtung (18) für den Analyten verbunden sind, um den Abfuhrauslass (8) entweder mit dem Sammelbehälter (20) oder der Analysevorrichtung (18) zu verbinden,
- Desorptionshilfsmittel (19),
- eine Steuereinheit der ersten (10) und zweiten (16) Verbindungsschaltmittel (10, 16) derart, dass die ersten Verbindungsschaltmittel (10) die Zufuhr von flüssiger Probe von der Extraktionszone (4) über den Zufuhreinlass (6) gestatten, die zweiten Verbindungsschaltmittel (16) die Abfuhr zum Sammelbehälter (20) über den Abfuhrauslass (8) gestatten,
**dadurch gekennzeichnet, dass** die mikrofabrizierte Extraktionszone (4) Mikrostrukturen umfasst, die sich von einer unteren Bodenplatte zu einer oberen Bodenplatte erstrecken, und eine stationäre Phase, die von den Mikrostrukturen getragen wird, wobei die Mikrostrukturen voneinander um einen Abstand zwischen 10 µm und 50 µm beabstandet sind, und wobei die Extraktionszone ein Gesamtvolumen von weniger als 20 µl aufweist.

2. Extraktionsvorrichtung nach Anspruch 1, wobei der Abstand zwischen den Mikrostrukturen zwischen 10 µm und 30 µm beträgt.

3. Extraktionsvorrichtung nach Anspruch 1 oder 2, wobei das Gesamtvolumen der Extraktionskammer weniger als 10 µl beträgt.

4. Extraktionsvorrichtung nach einem der Ansprüche 1 bis 3, wobei das Desorptionshilfsmittel (19) ein Mittel zum Erhitzen der Extraktionszone (4) ist, um die Thermodesorption der Analyten zu bewirken, wobei die Mittel zum Erhitzen (19) vorteilhafterweise für eine Erhöhung der Temperatur der Extraktionszone von mindestens 10 °C/s sorgt.

5. Extraktionsvorrichtung nach einem der Ansprüche 1 bis 4, wobei die Mikrostrukturen Mikrosäulen sind.

6. Extraktionsvorrichtung nach einem der Ansprüche 1 bis 5, wobei die untere Bodenplatte und die Mikrostrukturen einstückig sind und aus einem gut wärmeleitenden Material hergestellt sind.

7. Extraktionsvorrichtung nach einem der Ansprüche 1 bis 6, umfassend ein Gehäuse, das mit einer Bodenplatte, die die untere Bodenplatte ausbildet, und eine Abdeckung, die die obere Bodenplatte ausbildet, ausgestattet ist, wobei die Extraktionszone (4) in der Bodenplatte ausgeführt und durch die Abdeckung verschlossen ist.

8. Extraktionsvorrichtung nach einem der Ansprüche 1 bis 7, wobei die Steuereinheit auch die Desorptionshilfemittel (19) steuert.

9. Extraktionsvorrichtung nach einem der Ansprüche 1 bis 8, wobei die Steuereinheit derart ist, dass:
- sie während einer ersten Betriebsphase die ersten (10) und die zweiten (16) Verbindungsschaltmittel steuert, so dass der Extraktionszone (4) eine flüssige Probe zugeführt wird und die flüssige Probe zu dem Sammelbehälter (20) abgeführt wird,
- sie während einer zweiten Betriebsphase die ersten (10) und zweiten (16) Verbindungsschaltmittel steuert, so dass der Extraktionszone (4) über den Zufuhreinlass (6) Gas zugeführt wird und das Gas zu dem Sammelbehälter abgeführt wird,
- sie während einer dritten Betriebsphase die Desorptionshilfsmittel (19) und die ersten (10) und zweiten (16) Verbindungsschaltmittel steuert, so dass der Extraktionszone (4) über den Zufuhreinlass (6) Gas zugeführt wird und das Gas zur Analysevorrichtung (18) abgeführt wird.

10. Analysesystem mit einer Extraktionsvorrichtung nach einem der Ansprüche 1 bis 9, wobei die Analysevorrichtung (18) eine Säule für die Gasphasenchromatographie ist.

11. Analysesystem nach Anspruch 10, umfassend eine direkte Verbindung zwischen der Gasquelle und der Chromatographiesäule (18) und dritte Verbindungsschaltmittel, so dass, wenn die ersten Schaltmittel (10) die Zufuhr von der Extraktionszone (4) über die Gasquelle gestatten, die dritten Verbindungsschaltmittel die direkte Zufuhr von der Chromatographiesäule (18) über die Gasquelle unterbrechen.

12. Verfahren zum Extrahieren mindestens eines in einer flüssigen Probe enthaltenen Analyten mittels des Extraktionssystems nach Anspruch 10 oder 11, umfassend die folgenden Schritte:
a) Zirkulieren der flüssigen Probe durch die mit der stationären Phase versehene Extraktionszone, wobei der Analyt in der Extraktionszone adsorbiert wird, wobei die flüssige Probe in einen Sammelbehälter abgeführt wird,
b) Unterbrechen der Zirkulation der flüssigen Probe,
c) Zirkulieren eines Gases durch die Extraktionszone, um die Extraktionszone zu trocknen, wobei das Gas zur Sammelzone abgeführt wird,
d) Unterbrechen der Gaszirkulation,
e) Zirkulieren eines Gases durch die Extraktionszone des Analyten und Desorbieren des Analyten.

13. Extraktionsverfahren nach Anspruch 12, wobei in Schritt e) die Extraktionszone erhitzt wird, um eine Desorption zu bewirken.

14. Extraktionsverfahren nach Anspruch 12 oder 13, wobei das während des Schrittes c) zirkulierende Gas und das während des Schrittes e) zirkulierende Gas gleich sind und ein Trägergas bilden, wobei Schritt c) vorteilhafterweise zwischen 1 s und einigen Minuten, vorzugsweise zwischen 1 s und 60 s dauert und die Desorption von Schritt e) vorteilhafterweise zwischen 1 s und 10 s dauert.

15. Analyseverfahren für mindestens einen in einer Flüssigkeit enthaltenen Analyten, umfassend die Schritte a) bis e) des Extraktionsverfahrens nach einem der Ansprüche 12 bis 14 und einen Schritt f) nach Schritt e), wobei der Analyt analysiert wird, der Schritt f) vorteilhafterweise eine Gasphasenchromatographie ist.

16. Analyseverfahren nach Anspruch 12 bis 15, wobei die flüssige Probe eine wässrige Lösung ist und die Analyten flüchtige organische Verbindungen sind.

## Claims

1. Device for extracting at least one analyte contained in a liquid sample, comprising:
- an extraction and desorption zone (4) of the analyte provided with a stationary phase referred to as the extraction zone (4);
- at least one supply inlet (6) of the extraction zone (4);
- at least one evacuation outlet (8) of the extraction zone;
- first connection switching means (10) connected to the supply inlet (6), and connected to a tank containing the liquid sample (12) and to at least one gas source (14), for connecting the supply inlet (6) to either the tank of the liquid sample (12) or the gas source (14),
- second connection switching means (16) connected to the evacuation outlet (8) and connected to a collection tank (20) and to a device (18) for analysing the analyte, for connecting the evacuation outlet (8) to either the collection tank (20) or the analysis device (18),
- desorption assistance means (19),
- a control unit of the first (10) and second (16) connection switching means (10, 16) such that when the first connection switching means (10) allow the supply of liquid sample to the extraction zone (4) through the supply inlet (6), the second connection switching means (16) allow the evacuation to the collection tank (20) through the evacuation outlet (8),
**characterised in that** the micro-manufactured extraction zone (4) comprises microstructures extending from a bottom end to a top end, and a stationary phase supported by said microstructures, the microstructures being spaced apart from each other at a distance equal to between 10 µm and 50 µm, and wherein the extraction zone has a total volume of less than 20 µl.

2. Extraction device according to claim 1, wherein the spacing between the microstructures is between 10 µm and 30 µm.

3. Extraction device according to claim 1 or 2, wherein the extraction chamber has a total volume of less than 10 µl.

4. Extraction device according to any of claims 1 to 3, wherein the desorption assistance means (19) comprise heating means of the extraction zone (4) to provoke the thermodesorption of the analytes, the heating means (19) advantageously ensuring an increase in temperature of the extraction zone by at least 10° C/s.

5. Extraction device according to any of claims 1 to 4, wherein the microstructures are micropillars.

6. Extraction device according to any of claims 1 to 5, wherein the bottom end and the microstructures are made of a single piece and are made from a material with good thermal conduction.

7. Extraction device according to any of claims 1 to 6, comprising a box with a bottom forming the bottom end and a lid forming the top end, the extraction zone (4) being formed in the bottom and closed by the lid.

8. Extraction device according to any of claims 1 to 7, wherein the control unit also controls the desorption assistance means (19).

9. Extraction device according to any of claims 1 to 8, wherein the control unit is such that:
- during a first operating step, it controls the first (10) and second (16) connection switching means such that the extraction zone (4) is supplied with liquid sample and the liquid sample is evacuated to the collection tank (20),
- during a second operating step, it controls the first (10) and second (16) connection switching means such that the extraction zone (4) is supplied with gas through the supply inlet (6) and the gas is evacuated to the collection tank,
- during a third operating step, it controls the desorption assistance means (19) and the first (10) and second (16) connection switching means such that the extraction zone (4) is supplied with gas through the supply inlet (6) and the gas is evacuated to the analysis device (18).

10. Analysis system comprising an extraction device according to any of claims 1 to 9, the analysis device (18) being a gas phase chromatography column.

11. Analysis system according to claim 10, comprising a direct connection between the gas source and the chromatography column (18) and third connection switching means such that when the first switching means (10) allow the supply of the extraction zone (4) by the gas source, the third connection switching means interrupt the direct supply of the gas source to the chromatography column (18).

12. Method for extracting at least one analyte contained in a liquid sample using an extraction system according to claim 10 or 11, comprising the steps:
a) starting the circulation of the liquid sample through the extraction zone with the stationary phase, said analyte being adsorbed in the extraction zone, said liquid sample being evacuated to a collection tank,
b) interrupting the circulation of the liquid sample,
c) starting the circulation of a gas through the extraction zone to dry the extraction zone, the gas being evacuated to the collection zone,
d) interrupting the gas circulation,
e) starting the circulation of a gas through the extraction zone of the analyte and the desorption of the analyte.

13. Method of extraction according to claim 12, wherein in step e), the extraction zone is heated to provoke desorption.

14. Method of extraction according to claim 12 or 13, wherein the gas circulating in step c) and the gas circulating in step e) are a same gas and form a carrier gas, step c) lasting advantageously between 1 s and a few minutes, preferably between 1 s and 60 s, and the desorption of e) taking advantageously between 1 s and 10 s.

15. Method for analysing at least one analyte contained in a liquid comprising steps a) to e) of the extraction method according to any of claims 12 to 14, and a step f) following step e) in which the analyte is analysed, step f) being advantageously gas phase chromatography.

16. Method of analysis according to claim 12 to 15, wherein the liquid sample is an aqueous solution and the analytes are volatile organic compounds.
